# EUROPÄISCHE PATENTSCHRIFT

(11) **EP 2 961 049 B1**
(45) Veröffentlichungstag und Bekanntmachung des Hinweises auf die Patenterteilung: **12.04.2017**
(21) Anmeldenummer: 14173928.4
(22) Anmeldetag: 25.06.2014
(51) Int. Cl.: H02M 1/08, H02M 1/38, H02M 7/538

(54) **Ansteuerschaltung eines Resonanzwandlers**
Control circuit of a resonant converter
Commutateur de commande d'un convertisseur de courant à résonance

(43) Veröffentlichungstag der Anmeldung: 30.12.2015
(73) Patentinhaber: Siemens Aktiengesellschaft, 80333 München (DE)
(72) Erfinder: Dyszewski, Janusz, 1200 Wien (AT); Benesch, Karl, 3340 Waidhofen/Ybbs (AT); Reschenauer, Stefan, 2191 Atzelsdorf (AT)
(74) Vertreter: Maier, Daniel Oliver

(56) Entgegenhaltungen:
- US-A- 4 937 470
- US-A1- 2004 047 164
- US-A1- 2014 140 102
- HASSIG H R ET AL: "ZUVERLASSIGER BETRIEB VON MOSFETS IN BRUCKENSCHALTUNGEN", ELEKTRONIK, W E K A FACHZEITSCHRIFTEN-VERLAG GMBH, DE, Bd. 38, Nr. 10, 12. Mai 1989 (1989-05-12), Seiten 55/56,58-63, XP000071433, ISSN: 0013-5658
- BISWAS S K ET AL: "Gate drive methods for IGBTs in bridge configurations", INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE, 2. Oktober 1994 (1994-10-02), Seiten 1310-1316, XP010124238, DOI: 10.1109/IAS.1994.377589 ISBN: 978-0-7803-1993-6

## Beschreibung

Die Erfindung betrifft eine Ansteuerschaltung für eine Leistungsbrückenschaltung eines Resonanzwandlers, umfassend einen induktiven Ansteuerübertrager, welcher ein mittels CMOS-Treiber erzeugtes gepulstes Steuersignal auf die Leistungsbrückenschaltung überträgt.

Resonanzwandler funktionieren ohne pulsbreitenmodulierte Regelung (PWM). Die Leistungsbrückenschaltung wird immer mit vollem Tastverhältnis angesteuert, wobei die Schaltfrequenz das Übertragungsverhältnis und damit die Ausgangsspannung bestimmt.

Zur Ansteuerung der Leistungsbrückenschaltung im Hochspannungsbereich ist ein induktiver Ansteuerübertrager notwendig, um die Steuerschaltung von der Leistungsschaltung galvanisch zu trennen. Dieser Ansteuerübertrager überträgt ein Steuersignal zum Schalten der in der Leistungsbrückenschaltung angeordneten Leistungsschalter.

Erzeugt wird das Steuersignal in der Regel mittels sogenannter CMOS-Treiber. Das Steuersignal ist dabei eine Abfolge sich abwechselnder positiver und negativer Pulsen mit jeweils dazwischen auftretenden Totzeiten. Die Totzeit zwischen den Pulsen des Steuersignals sorgt für ein Schalten bei Nullspannung (Zero Voltage Switching, ZVS) und schützt die Leistungsschalter vor gleichzeitigem Durchschalten. Ansonsten käme es zu einem Kurzschluss.

Solch ein CMOS-Treiber ist zum Beispiel aus US4937470 bekannt.

Bei einem CMOS-Treiber handelt es sich um zwei in Serie geschaltete MOSFETs, wobei der erste MOSFET den CMOS-TreiberAusgang gegen eine Versorgungsspannung und der zweite MOSFET den CMOS-Treiber-Ausgang gegen ein Massepotenzial zieht.

Um eine Brückenschaltung über einen Ansteuerübertrager anzusteuern, sind zwei CMOS-Treiber notwendig. Deren Ausgänge sind dabei über eine Primärwicklung des Ansteuerübertragers verbunden. Sekundärseitig weist der Ansteuerübertrager zwei Sekundärwicklungen auf, welche gegengleich gewickelt sind. Die an den Sekundärwicklungen abgreifbaren Pulse sind somit ebenfalls gegengleich, das heißt, ein Gatepuls ist positiv, während der an der anderen Sekundärwicklung anliegende Gatepuls negativ ist und umgekehrt.

Bei einem Schaltzyklus werden während eines ersten Pulses die CMOS-Treiber in der Weise geschaltet, dass ein Strom durch die Primärwicklung fließt. Beispielsweise schaltet der erste MOSFET des ersten CMOS-Treibers dessen Ausgang auf die Versorgungsspannung und der zweite MOSFET des zweiten CMOS-Treibers schaltet dessen Ausgang auf das Massepotenzial. Am Ende dieses ersten Pulses schalten für die vorgegebene Totzeit alle MOSFETs ab. Dann schaltet während eines zweiten Pulses der zweite MOSFET des ersten CMOS-Treibers dessen Ausgang auf das Massepotenzial und der erste MOSFET des zweiten CMOS-Treibers schaltet dessen Ausgang auf die Versorgungsspannung, sodass der Strom durch die Primärwicklung in die andere Richtung fließt.

Integrierte CMOS-Treiber sind meistens für eine direkte Ansteuerung ohne Ansteuerübertrager optimiert. Zum Treiben von induktiven Übertragern sind sie deshalb nicht gut geeignet. Meistens hilft eine Überdimensionierung der CMOS-Treiber. Eine solche Maßnahme ist jedoch im Regelfall unwirtschaftlich.

Probleme bestehen insbesondere aufgrund der Totzeit, während der über den Ansteuerübertrager ein Energiefluss von der Leistungsbrückenschaltung zurück zu den CMOS-Treibern auftritt. Bei unzureichender Dimensionierung der CMOS-Treiber kann der Fall eintreten, dass die Leistungsschalter nicht richtig sperren, dass also infolge eines aufrechten Energieflusses eine zu hohe Gaterestspannung anliegt.

Diese Problematik wird durch auftretende Leckströme und ungünstige Zustände wie z.B. hohe Temperaturen begünstigt, wodurch es in letzter Konsequenz zum simultanen Durchschalten der Leistungsbrückenschaltung kommen kann, was oft mit einer Schädigung der Schaltung infolge eines Kurzschlusses endet.

Ein weiteres Problem besteht in einer hohen Impedanz der CMOS-Treiber-Schaltung, weil zwei CMOS-Treiber in Serie geschaltet sind. Beim Schalten kann es dabei zu Schwingungen kommen, welche die elektromagnetische Verträglichkeit (EMV) beeinträchtigen.

Der Erfindung liegt die Aufgabe zugrunde, für eine Ansteuerschaltung der eingangs genannten Art eine Verbesserung gegenüber dem Stand der Technik anzugeben.

Erfindungsgemäß wird diese Aufgabe gelöst durch die Merkmale des Anspruchs 1. Vorteilhafte Weiterbildungen sind den abhängigen Ansprüchen entnehmbar.

Dabei ist am Ausgang jedes CMOS-Treibers eine Klemmschaltung (Clampingschaltung) angeordnet ist, welche während einer Totzeit zwischen zwei Pulsen des Steuersignals eine Primärwicklung des Ansteuerübertragers gegen ein Massepotenzial klemmt. Damit werden Überspannungen, die ansonsten beim Schalten der Ansteuerübertragerinduktivität entstehen, während einer Totzeit geklemmt und die Leistungsschalter schalten sicher ab. Zudem werden die CMOS-Treiber aufgrund geringerer Verluste entlastet. Während einer Schaltperiodenhälfte wird nämlich der Ausgang eines CMOS-Treibers über die zugeordnete Klemmschaltung gegen das Massepotenzial gezogen. Zudem belasten Totzeitpulse nicht die CMOS-Treiber-Schalter, sondern werden durch die Klemmschaltung kurzgeschlossen.

Die erfindungsgemäße Maßnahme ermöglicht den Einsatz einfacher und kostengünstiger integrierter CMOS-Treiber, wodurch der Resonanzwandler als Gerät kostengünstiger und mit kleiner Baugröße herstellbar ist. Dabei ist der Abstand zwischen den CMOS-Bausteinen und dem Ansteuerübertrager gegenüber herkömmlichen Ansteuerschaltungen weniger kritisch, weil die Klemmschaltungen direkt am Eingang des Ansteuerübertragers angeordnet sind.

Auch die EMV-Problematik ist entschärft, weil hochfrequente Schwingungen beim Ein- und Ausschalten der Leistungsschalter reduziert werden.

Besonders effektiv ist diese Lösung, wenn die Leistungsbrückenschaltung im Hochspannungsbereich arbeitet, weil dann ein drohender Kurzschluss aufgrund der hohen Spannungen umso problematischer wäre.

Eine einfache Ausprägung der Erfindung sieht vor, dass jede Klemmschaltung ein Sperrelement umfasst, welches in der Verbindungsleitung zwischen dem Ausgang des zugeordneten CMOS-Treibers und einem Anschluss der Primärwicklung des Ansteuerübertragers angeordnet ist, dass diese Verbindungsleitung über ein Schaltelement mit dem Massepotenzial verbunden ist und dass das Schaltelement mittels einer an dem Sperrelement im leitenden Zustand abfallenden Flussspannung angesteuert ist, sodass das Schaltelement bei leitendem Sperrelement abgeschaltet ist. Auf diese Weise ist eine einfache Ansteuerung der jeweiligen Klemmschaltung gegeben, die sich unmittelbar von den Schaltzuständen der CMOS-Treiber ableitet.

Dabei ist es von Vorteil, wenn parallel zu dem Schaltelement ein Begrenzungselement zur Begrenzung einer an dem Schaltelement anliegenden negativen Spannung angeordnet ist. Während einer Totzeit ist dann die Primärwicklung des Ansteuerübertragers bei positiver Spannung über die Schaltelemente der Klemmschaltungen und bei negativer Spannung über die Begrenzungselemente auf das Massepotenzial gelegt.

Dabei ist es günstig, wenn das jeweilige Begrenzungselement eine Schottky-Diode ist.

Eine weitere Verbesserung sieht vor, dass jeweils zwischen dem Sperrelement und dem Ausgang des zugeordneten CMOS-Treibers ein Glättungselement angeordnet ist. Auf diese Weise werden störende Schwingungen gedämpft.

Ein solches Glättungselement ist in einer einfachen Ausprägung ein Widerstand.

Das Sperrelement, das in der jeweiligen Klemmschaltung zur Ansteuerung des Schaltelements dient, ist günstigerweise als eine Doppeldiode ausgebildet. Dann ist die abfallende Flussspannung jedenfalls ausreichend hoch, um das Schaltelement abzuschalten.

In Weiterer Folge ist es von Vorteil, wenn das Schaltelement ein PNP-Transistor ist, dessen Basis-Anschluss und dessen Emitter-Anschluss über das Sperrelement miteinander verbunden sind, und dessen Kollektor-Anschluss mit dem Massepotential verbunden ist. Damit ist eine einfache Schaltungsanordnung gegeben, welche die Klemmfunktion optimal erfüllt.

Eine vorteilhafte Ausprägung der Erfindung sieht vor, dass die Leistungsbrückenschaltung als Halbbrücke aufgebaut ist, welche mittels zweier CMOS-Treiber angesteuert ist. Dieser Aufbau eines Resonanzwandlers ist einfach zu dimensionieren und ist für hohe Spannungen bei gleichzeitig geringer Baugröße geeignet.

Vereinfacht wird der Aufbau dadurch, dass jeder CMOS-Treiber als integrierte Serienschaltung zweier MOSFET ausgebildet ist. Durch die erfindungsgemäße Lösung sind solche integrierten CMOS-Treiber entsprechend klein dimensionierbar, was sich wieder positiv auf die Baugröße und die Fertigungskosten des Resomanzwawdlers auswirkt.

Die Erfindung wird nachfolgend in beispielhafter Weise unter Bezugnahme auf die beigefügten Figuren erläutert. Es zeigen in schematischer Darstellung:
- Fig. 1: Primärseite einer Ansteuerschaltung nach dem Stand der Technik
- Fig. 2: Primärseite einer Ansteuerschaltung mit Klemmschaltungen
- Fig. 3: Sekundärseite der Ansteuerschaltung mit Leistungshalbbrücke

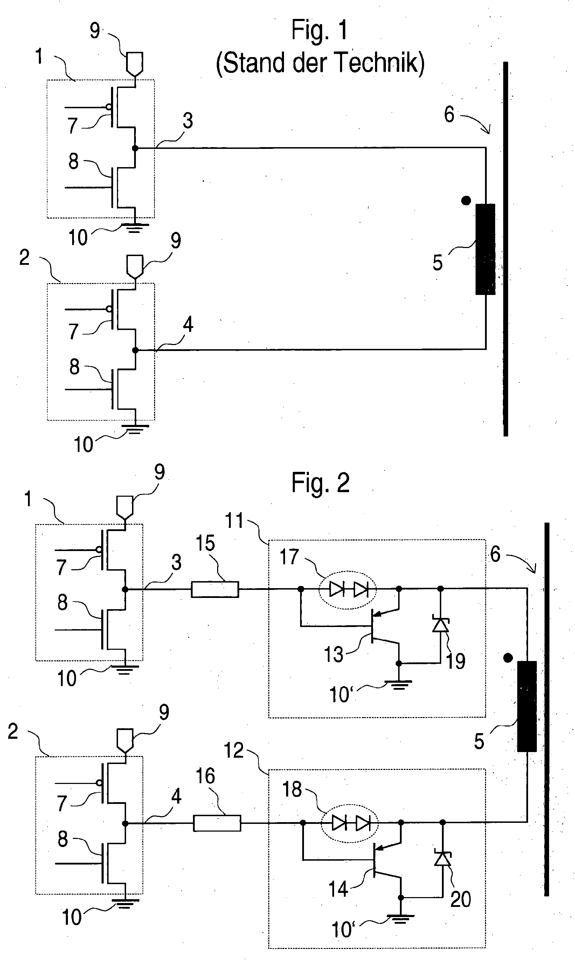

Die in Fig. 1 gezeigte Primärseite einer bekannten Ansteuerschaltung umfasst zwei CMOS-Treiber 1, 2, deren Ausgänge 3, 4 über eine Primärwicklung 5 eines Ansteuerübertragers 6 miteinander verbunden sind. Jeder CMOS-Treiber 1, 2 umfasst zwei MOSFETs 7, 8, wobei der erste MOSFET 7 den jeweiligen Treiberausgang 3, 4 auf eine Versorgungsspannung 9 schaltet und der zweite MOSFET 8 den jeweiligen Treiberausgang 3, 4 auf ein Massepotenzial 10 schaltet.

Um die eingangs erläuterten Probleme einer solchen Schaltung zu vermeiden, ist erfindungsgemäß zwischen jedem Treiberausgang 3, 4 und dem jeweiligen Anschluss der Primärwicklung 5 eine Klemmschaltung 11, 12 angeordnet. Ein Beispiel ist in Fig. 2 dargestellt.

Jede Klemmschaltung 11, 12 umfasst ein Schaltelement 13, 14, beispielsweise einen PNP-Trans'istor. Der Basis-Anschluss. liegt dabei am Ausgang des zugeordneten CMOS-Treibers 1, 2 an, wobei optional ein Widerstand als Glättungselement 15, 16 zwischengeschaltet ist. Auch der Emitter-Anschluss ist an der Verbindung zwischen Treiberausgang 3, 4 und Primärwicklung 5 angeschlossen. Zwischen Basis-Anschluss und Emitter-Anschluss ist allerdings zur Steuerung des Schaltelements 13, 14 ein Sperrelement 17, 18 angeordnet, welches in Richtung des Emitter-Anschlusses leitend und in Richtung des Basis-Anschlusses sperrt. Wenn im leitenden Zustand ein Strom durch das Sperrelement 17, 18 fließt, fällt eine Flussspannung ab, welche das zugeordnete Schaltelement 13, 14 abschaltet.

Im Umkehrschluss ist das jeweilige Schaltelement 13, 14 immer dann eingeschaltet, wenn das zugeordneten Sperrelement 17, 18 sperrt, also bei einem Energierückfluss. Das ist während einer Totzeit der Fall. Hier bewirkt das eingeschaltete Schaltelement 13, 14, dass die Primärwicklung 5 gegen das am Kollektor-Anschluss anliegende Massepotenzial 10' geklemmt wird. Dabei kann es sich um dasselbe Massepotential 10 handeln, an das die CMOS-Treiber 1, 2 angeschlossen sind. Es besteht jedoch auch die Möglichkeit, ein anderes Potenzial anzulegen.

Um eine ausreichend hohe Schaltspannung aufzubringen, ist es günstig, wenn das jeweilige Sperrelement 17, 18 als Doppeldiode ausgebildet ist.

Um während einer Totzeit eine negative Spannung zu begrenzen, ist in jeder Klemmschaltung parallel zum Emitter- und Kollektor-Anschluss des Schaltelements 13, 14 ein Begrenzungselement 19, 20 angeordnet, beispielsweise eine Schottky-Diode.

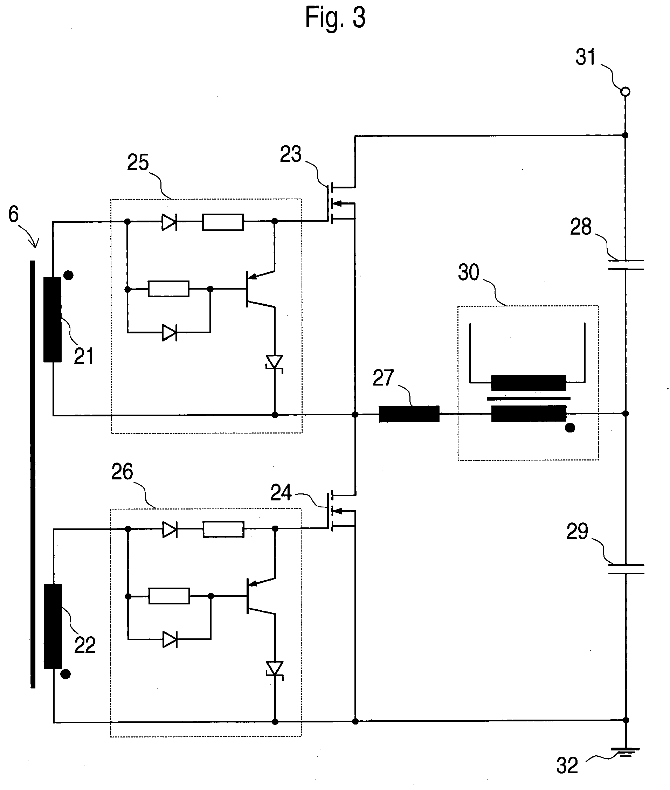

Die in Fig. 3 dargestellte Sekundärseite des Ansteuerübertragers 6 umfasst zwei Sekundärwicklungen 21, 22, die gegengleich gewickelt sind. Über die obere Sekundärwicklung 21 wird das Gatesignal für die obere Leistungshalbbrückenhälfte (High-Side) übertragen. Das Gatesignal für die untere Leistungshalbbrückenhälfte (Low-Side) wird mit der unteren Sekundärwicklung 22 übertragen.

Durch die gegengleiche Wicklung wird erreicht, dass die Leistungsschalter 23, 24 gegengleich ein- und ausgeschaltet werden. Während der Totzeit vor einem Umschaltvorgang sind beide Leistungsschalter 23, 24 ausgeschaltet.

Zur sekundärseitigen Entmagnetisierung während einer Totzeit sind zwischen den Sekundärwicklungen 21, 22 und den Leistungsschaltern 23, 24 geeignete Hilfsschaltungen 25, 26 angeordnet.

Die Leistungsschaltung umfasst des Weiteren eine Resonanzinduktivität 27, Resonanzkondensatoren 28, 29 und einen Resonanzübertrager 30. Mittels dieser Elemente wird eine auf ein sekundärseitiges Potenzial 32 bezogene Eingangsspannung 31 auf eine Sekundärseite des Resonanzübertragers 30 übertragen.

Die Ansteuerschaltung mit den Klemmschaltungen 11, 12 hat folgende Funktionsweise. Auf der Primärseite des Ansteuerübertragers 6 fließt zunächst Energie von den CMOS-Treibern 1, 2 in Richtung der Leistungshalbbrücke. Konkret verläuft ein Stromfluss vom Ausgang des oberen CMOS-Treibers 1 (High-Side-Treiber) über das obere Glättungselement 15, das leitende Sperrelement 17 der oberen Klemmschaltung 11, die Primärwicklung 5 und das Schaltelement 14 der unteren Klemmschaltung 12 zum Massepotenzial 10'. Das Schaltelement 13 der oberen Klemmschaltung 11 ist dabei mittels der Flussspannung des leitenden Sperrelements 17 abgeschaltet.

Auf der Sekundärseite des Ansteuerübertragers 6 bewirken positive und negative Pulse ein gleichzeitiges Einschalten und Sperren der Leistungshalbbrücke.

Am Ende jedes Pulses ist eine Totzeit vorgesehen. Hier erfolgt ein Energiefluss von der Sekundärseite auf die Primärseite des Austeuerübertragers 6. Beide CMOS-Treiberausgänge 3, 4 liegen dabei auf Massepotenzial 10, geben also ein Low-Signal aus. Beide Basis-Anschlüsse der Schaltelemente 13, 14 der Klemmschaltungen 11, 12 sind somit über die CMOS-Treiber 1, 2 mit dem Massepotenzial 10 verbunden. Eine an der jeweiligen Klemmschaltung 11, 12 anliegende positive Spannung verstärkt dann den Basisstrom des jeweiligen Schaltelements 13, 14. Folglich klemmt der Kollektorstrom die Primärwicklung gegen das Massepotential 10'.

Bei einer negativen Spannung wird das entsprechende Begrenzungselement 19, 20 leitend und bewirkt auf diese Weise eine Spannungsbegrenzung.

Bei einer Umkehrung des Stromflusses während eines nachfolgenden Pulses fließt der Strom vom Ausgang des unteren CMOS-Treibers 2 (Low-Side-Treiber) über das untere Glättungselement 16, das leitende Sperrelement 18 der unteren Klemmschaltung 12, die Primärwicklung 5 und das Schaltelement 13 der oberen Klemmschaltung 11 zum Massepotenzial 10'. Das Schaltelement 14 der unteren Klemmschaltung 12 ist dabei mittels der Flussspannung des leitenden Sperrelements 18 abgeschaltet.

Somit werden beide Wicklungsanschlüsse der Primärwicklung 5 des Ansteuerübertragers 6 jeweils abwechselnd durch die obere und durch die untere Klemmschaltung mit dem Massepotenzial 10' verbunden.

## Patentansprüche

1. Ansteuerschaltung für eine Leistungsbrückenschaltung eines Resonanzwandlers, umfassend einen induktiven Ansteuerübertrager (6), welcher ein mittels CMOS-Treiber (1, 2) erzeugtes gepulstes Steuersignal auf die Leistungsbrückenschaltung überträgt, **dadurch gekennzeichnet, dass** am Ausgang (3, 4) jedes CMOS-Treibers (1, 2) eine Klemmschaltung (11, 12) angeordnet ist, welche während einer Totzeit zwischen zwei Pulsen des Steuersignals eine Primärwicklung (5) des Ansteuerübertragers (6) gegen ein Massepotenzial (10') klemmt.

2. Ansteuerschaltung nach Anspruch 1, **dadurch gekennzeichnet, dass** jede Klemmschaltung (11, 12) ein Sperrelement (17, 18) umfasst, welches in der Verbindungsleitung zwischen dem Ausgang (3, 4) des zugeordneten CMOS-Treibers (1, 2) und einem Anschluss der Primärwicklung (5) des Ansteuerübertragers (6) angeordnet ist, dass diese Verbindungsleitung über ein Schaltelement (13, 14) mit dem Massepotenzial (10') verbunden ist und dass das Schaltelement (13, 14) mittels einer an dem Sperrelement (17, 18) im leitenden Zustand abfallenden Flussspannung angesteuert ist, sodass das Schaltelement (13, 14) bei leitendem Sperrelement (17, 18) abgeschaltet ist.

3. Ansteuerschaltung nach Anspruch 2, **dadurch gekennzeichnet, dass** parallel zu dem Schaltelement (13, 14) ein Begrenzungselement (19, 20) zur Begrenzung einer an dem Schaltelement (13, 14) anliegenden negativen Spannung angeordnet ist.

4. Ansteuerschaltung nach Anspruch 3, **dadurch gekennzeichnet, dass** das Begrenzungselement (19, 20) eine Schottky-Diode ist.

5. Ansteuerschaltung nach einem der Ansprüche 2 bis 4, **dadurch gekennzeichnet, dass** zwischen dem Sperrelement (17, 18) und dem Ausgang (3, 4) des zugeordneten CMOS-Treibers (1, 2) ein Glättungselement (15, 16) angeordnet ist.

6. Ansteuerschaltung nach Anspruch 5, **dadurch gekennzeichnet, dass** das Glättungselement (15, 16) ein Widerstand ist.

7. Ansteuerschaltung nach einem der Ansprüche 2 bis 6, **dadurch gekennzeichnet, dass** das Sperrelement (17, 18) als Doppeldiode ausgebildet ist.

8. Ansteuerschaltung nach einem der Ansprüche 2 bis 7, **dadurch gekennzeichnet, dass** das Schaltelement (13, 14) ein PNP-Transistor ist, dessen Basis-Anschluss und dessen Emitter-Anschluss über das Sperrelement (17, 18) miteinander verbunden sind, und dessen Kollektor-Anschluss mit dem Massepotential (10') verbunden ist.

9. Ansteuerschaltung nach einem der Ansprüche 1 bis 8, **dadurch gekennzeichnet, dass** die Leistungsbrückenschaltung als Halbbrücke aufgebaut ist, welche mittels zweier CMOS-Treiber (1, 2) angesteuert ist.

10. Ansteuerschaltung nach einem der Ansprüche 1 bis 9, **dadurch gekennzeichnet, dass** jeder CMOS-Treiber (1, 2) als integrierte Serienschaltung zweier MOSFET (7, 8) ausgebildet ist.

## Claims

1. Activation circuit for a power bridge circuit of a resonant converter, comprising an inductive activation transformer (6), which transfers a pulsed control signal generated by means of CMOS drivers (1, 2) to the power bridge circuit, **characterised in that** a clamping circuit (11, 12) is arranged at the output (3, 4) of each CMOS driver (1, 2), said clamping circuit clamping a primary winding (5) of the activation transformer (6) against a ground potential (10') during a dead time between two pulses of the control signal.

2. Activation circuit according to claim 1, **characterised in that** each clamping circuit (11, 12) comprises a blocking element (17, 18) which is arranged in the connecting line between the output (3, 4) of the assigned CMOS driver (1, 2) and a terminal of the primary winding (5) of the activation transformer (6), that this connecting line is connected to the ground potential (10') via a switching element (13, 14) and that the switching element (13, 14) is activated by means of a flux voltage which is falling at the blocking element (17, 18) in the conducting state, so that the switching element (13, 14) is switched off when the blocking element (17, 18) is conducting.

3. Activation circuit according to claim 2, **characterised in that** a limiting element (19, 20) for limiting a negative voltage applied to the switching element (13, 14) is arranged in parallel to the switching element (13, 14).

4. Activation circuit according to claim 3, **characterised in that** the limiting element (19, 20) is a Schottky diode.

5. Activation circuit according to one of claims 2 to 4, **characterised in that** a smoothing element (15, 16) is arranged between the blocking element (17, 18) and the output (3, 4) of the assigned CMOS driver (1, 2).

6. Activation circuit according to claim 5, **characterised in that** the smoothing element (15, 16) is a resistor.

7. Activation circuit according to one of claims 2 to 6, **characterised in that** the blocking element (17, 18) is embodied as a double diode.

8. Activation circuit according to one of claims 2 to 7, **characterised in that** the switching element (13, 14) is a PNP transistor, the base terminal and the emitter terminal of which are connected to one another by way of the blocking element (17, 18) and the collector terminal of which is connected to the ground potential (10').

9. Activation circuit according to one of claims 1 to 8, **characterised in that** the power bridge circuit is designed as a half bridge, which is activated by means of two CMOS drivers (1, 2).

10. Activation circuit according to one of claims 1 to 9, **characterised in that** each CMOS driver (1, 2) is embodied as an integrated series circuit of two MOSFETs (7, 8).

## Revendications

1. Circuit de commande pour un montage de puissance en pont d'un convertisseur résonant, comprenant un transmetteur de commande (6) inductif, lequel transmet au montage de puissance en pont un signal de commande pulsé généré par des circuits d'attaque CMOS (1, 2), **caractérisé en ce qu'**un circuit de blocage (11, 12) est monté à la sortie (3, 4) de chaque circuit d'attaque CMOS (1, 2), lequel bloque un enroulement primaire (5) du transmetteur de commande (6) contre un potentiel de masse (10') pendant un temps mort entre deux impulsions du signal de commande.

2. Circuit de commande selon la revendication 1, **caractérisé en ce que** chaque circuit de blocage (11, 12) comprend un élément de blocage (17, 18), lequel est placé dans la ligne de connexion entre la sortie (3, 4) du circuit d'attaque CMOS (1, 2) associé et une borne de l'enroulement primaire (5) du transmetteur de commande (6), **en ce que** cette ligne de connexion est reliée via un élément de commutation (13, 14) au potentiel de masse (10') et **en ce que** l'élément de commutation (13, 14) est commandé par une tension directe qui chute au niveau de l'élément de blocage (17, 18) à l'état conducteur, de telle sorte que l'élément de commutation (13, 14) est coupé lorsque l'élément de blocage (17, 18) est conducteur.

3. Circuit de commande selon la revendication 2, **caractérisé en ce qu'**un élément limiteur (19, 20) est monté en parallèle avec l'élément de commutation (13, 14), servant à limiter une tension négative appliquée à l'élément de commutation (13, 14).

4. Circuit de commande selon la revendication 3, **caractérisé en ce que** l'élément limiteur (19, 20) est une diode Schottky.

5. Circuit de commande selon l'une des revendications 2 à 4, **caractérisé en ce qu'**un élément de lissage (15, 16) est monté entre l'élément de blocage (17, 18) et la sortie (3, 4) du circuit d'attaque CMOS (1, 2) associé.

6. Circuit de commande selon la revendication 5, **caractérisé en ce que** l'élément de lissage (15, 16) est une résistance.

7. Circuit de commande selon l'une des revendications 2 à 6, **caractérisé en ce que** l'élément de blocage (17, 18) est conçu comme diode double.

8. Circuit de commande selon l'une des revendications 2 à 7, **caractérisé en ce que** l'élément de commutation (13, 14) est un transistor PNP, dont la borne de base et la borne d'émetteur sont reliées entre elles via l'élément de blocage (17, 18) et dont la borne de collecteur est reliée au potentiel de masse (10').

9. Circuit de commande selon l'une des revendications 1 à 8, **caractérisé en ce que** le montage de puissance en pont est agencé en demi-pont, commandé au moyen de deux circuits d'attaque CMOS (1, 2).

10. Circuit de commande selon l'une des revendications 1 à 9, **caractérisé en ce que** chaque circuit d'attaque CMOS (1, 2) est conçu comme circuit série intégré de deux MOSFET (7, 8).
